# EUROPEAN PATENT APPLICATION

(11) **EP 2 301 981 A1**
(43) Date of publication of application: **30.03.2011**
(21) Application number: 09794396.3
(22) Date of filing: 06.07.2009
(51) Int. Cl.: C08G 18/12, C08G 18/00, C08G 18/44

(54) **AQUEOUS POLYURETHANE RESIN DISPERSION, MANUFACTURING METHOD FOR SAME, AND PAINT COMPOSITION CONTAINING SAME**

(30) Priority: 11.07.2008 JP 2008180856
(71) Applicant: Ube Industries, Ltd., Ube-shi Yamaguchi 755-8633 (JP)
(72) Inventor: NAKAMURA, Taku, Ube-shi, Yamaguchi 755-8633 (JP); NAIKI, Masahiro, Ube-shi, Yamaguchi 755-8633 (JP); MORIKAMI, Atsushi, Ube-shi, Yamaguchi 755-8633 (JP); ADACHI, Fumio, Ube-shi, Yamaguchi 755-8633 (JP); TAKAHASHI, Manabu, Ube-shi, Yamaguchi 755-8633 (JP); FUJII, Teruaki, Ube-shi, Yamaguchi 755-8633 (JP)
(74) Representative: Albrecht, Thomas
(86) International application number: PCT/JP2009/062276
(87) International publication number: WO 2010/004951

(57) **Abstract**

It is to provide an aqueous polyurethane dispersion which gives a coating film excellent in abrasion resistance.

It is an aqueous polyurethane resin dispersion which comprises a polyurethane resin obtained by reacting (A) a polyurethane prepolymer which is obtained by reacting (a) a polyisocyanate compound, (b) a polyol compound containing a polycarbonate polyol having an alicyclic structure, and (c) a polyol compound having an acidic group, and (B) a chain elongating agent having a reactivity with the isocyanate group of (A) the polyurethane prepolymer, being dispersed in an aqueous medium, a content of an alicyclic structure is 26.0 to 60.0% by weight in terms of a solid component(s), and a sum of a content of an urethane boding and a content of a urea bonding is 17.7 to 30.0% by weight in terms of a solid component(s).

## Description

### TECHNICAL FIELD

The present invention relates to an aqueous polyurethane resin dispersion in which a polyurethane resin obtained form a polycarbonate polyol is dispersed in an aqueous medium, a method for preparing the same, and a coating composition containing the same.

### BACKGROUND ART

An aqueous polyurethane resin dispersion is a material now substituting for a solvent type polyurethane as an environment-friendly material since it can provide a coating film having adhesive property, abrasion resistance and rubbery properties, and a volatile organic material can be reduced as compared with the conventional solven type polyurethane. On the other hand, a polycarbonate polyol is a useful compound as a starting material for preparing a polyurethane resin which is used for preparing a hard foam, a soft foam, a paint, an adhesive, artificial leather, ink binder etc., by the reaction with an isocyanate compound. It has been described that characteristics of the polyurethane resin using the polycarbonate polyol are revealed by high cohesive force due to the carbonate structure, and the material is excellent in water resistance, heat resistance, oil resistance, recovery of elasticity, abrasion resistance and weather resistance (see Non-Patent Literature 1). Also, in a coating film obtained by coating an aqueous urethane resin dispersion using a polycarbonate polyol as a starting material, it has been known that the film is excellent in light resistance, heat resistance, hydrolysis resistance and oil resistance (see Patent Literature 1). Thus, the aqueous polyurethane resin dispersion using a polycarbonate polyol shows good characteristics, but it is not necessarily sufficient as compared with those using a solvent type polyurethane. In particular, abrasion resistance of the coating film is still insufficient. It has been carried out to introduce a cross-linking structure into a polyurethane resin or to add a crosslinking material such as an epoxy resin and a polyfunctional isocyanate, etc. to carry out cross-linking at the time of curing for the purpose of improving such characteristics (see Patent Literature 2). However, introduction of a cross-linking structure into a polyurethane resin likely causes lowering in dispersibility of an aqueous polyurethane resin dispersion or film-forming property, and addition of a crosslinking material likely causes lowering in storage stability.

[Patent Literature 1] JP H10-120757A
[Patent Literature 2] JP 2005-113318A
[Non-Patent Literature 1] "Latest polyurethane material and applied techniques" published by CMC Publishing Co., Ltd., Chapter 2, p. 43

### SUMMARY OF THE INVENTION

### PROBLEMS TO BE SOLVED BY THE INVENTION

An object of the present invention is to provide an aqueous polyurethane resin dispersion which provides a coating film having good abrasion resistance.

### MEANS TO SOLVE THE PROBLEMS

The present inventors have carried out various studies to solve the above-mentioned problems, and as a result, they have found that a polyurethane resin dispersion using a specific polycarbonate polyol gives a coating film having good abrasion resistance without introducing cross-linking, to accomplish the present invention.

The present invention is more specifically as mentioned below.
(1) An aqueous polyurethane resin dispersion which comprises a polyurethane resin obtained by reacting
   (A) the polyurethane prepolymer which is obtained by reacting (a) a polyisocyanate compound, (b) a polyol compound containing a polycarbonate polyol having an alicyclic structure, and (c) a polyol compound having an acidic group, and
   (B) a chain elongating agent having a reactivity with the isocyanate group of (A) the polyurethane prepolymer,
   being dispersed in an aqueous medium,
   a content of an alicyclic structure is 26.0 to 60.0% by weight in terms of a solid component(s), and a sum of a content of an urethane boding and a content of a urea bonding is 17.7 to 30.0% by weight in terms of a solid component(s).
(2) The aqueous polyurethane resin dispersion described in the above-mentioned (1), wherein (b) the polyol compound containing a polycarbonate polyol having an alicyclic structure contains a polycarbonate polyol obtained by reacting a polyol containing cyclohexanedimethanol and a carbonate.
(3) The aqueous polyurethane resin dispersion described in the above-mentioned (2), wherein a unit derived from cyclohexanedimethanol among units derived from the polyol containing the cyclohexanedimethanol which constitutes the polycarbonate polyol is 20 mol% or more.
(4) The aqueous polyurethane resin dispersion described in any one of the above-mentioned (1) to (3), wherein (a) the polyisocyanate compound contains one or more polyisocyanate compound having an alicyclic structure.
(5) The aqueous polyurethane resin dispersion described in the above-mentioned (4), wherein (a) the polyisocyanate compound is 4,4'-dicyclohexylmethane diisocyanate.
(6) The aqueous polyurethane resin dispersion described in any one of the above-mentioned (1) to (5), wherein (B) the chain elongating agent is a polyamine compound.
(7) A coating composition containing the aqueous polyurethane resin dispersion described in any one of the above-mentioned (1) to (6).
(8) A process for preparing the aqueous polyurethane resin dispersion described in any one of the above-mentioned (1) to (6) which comprises
   (α) a step of reacting (a) a polyisocyanate compound, (b) a polyol compound containing a polycarbonate polyol having an alicyclic structure and (c) a polyol compound having an acidic group to obtain (A) a polyurethane prepolymer;
   (β) a step of neutralizing an acidic group of (A) the polyurethane prepolymer;
   (γ) a step of dispersing the polyurethane prepolymer in an aqueous medium; and
   (δ) a step of reacting an isocyanate group of (A) the polyurethane prepolymer and (B) a chain elongating agent to obtain an aqueous polyurethane resin.

### EFFECTS OF THE INVENTION

The aqueous polyurethane resin dispersion of the present invention has good film-forming property and film-forming property, and can be provided a coating film having good abrasion resistance. Also, dispersibility as an aqueous polyurethane resin dispersion and stability as an emulsion are good, and it has hydrolysis resistance, durability, and heat resistance as well. Thus, the aqueous polyurethane resin dispersion of the present invention can be used as a coating agent, a starting material for a composition for a paint particularly excellent in abrasion resistance. The coating composition containing the aqueous polyurethane resin dispersion of the present invention has high utility, and according to the process for preparing the aqueous polyurethane resin dispersion of the present invention, an aqueous polyurethane resin dispersion which can provide a coating film having good abrasion resistance can be obtained with an easy and simple method.

### BEST MODE TO CARRY OUT THE INVENTION

A polyurethane resin in the aqueous polyurethane resin dispersion of the present invention can be obtained by reacting (A) a polyurethane polymer, (B) a chain elongating agent having a reactivity with the isocyanate group of (A) the polyurethane prepolymer. (A) the polyurethane prepolymer can be obtained by reacting (a) a polyisocyanate compound, (b) a polyol compound containing a polycarbonate polyol having an alicyclic structure, and (c) a polyol compound having an acidic group.

### [(a) Polyisocyanate compound]

(a) The polyisocyanate compound which can be used in the present invention is not particularly limited, and there may be mentioned an aromatic polyisocyanate compound, aliphatic polyisocyanate compound and alicyclic polyisocyanate compound each having 2 or more isocyanate groups, and, for example, an aromatic polyisocyanate compound having 6 to 20 carbon atoms (excluding carbon atom in the isocyanate group. Hereinafter the same), an aliphatic polyisocyanate compound having 2 to 18 carbon atoms, and an alicyclic polyisocyanate compound having 4 to 20 carbon atoms. More specifically, there may be mentioned an aromatic polyisocyanate compound such as 1,3-phenylenediisocyanate, 1,4-phenylenediisocyanate, 2,4-tolylenediisocyanate (TDI), 2,6-tolylenediisocyanate, 4,4'-diphenylenemethane diisocyanate (MDI), 2,4-diphenylmethane diisocyanate, 4,4'-biphenyldiisocyanate, 3,3'-dimethyl-4,4'-biphenyldiisocyanate, 3,3'-dimethyl-4,4'-diphenylmethanediisocyanate, 1,5-naphthylene diisocyanate, m-isocyanatephenylsulfonyl isocyanate, p-isocyanatephenylsulfonyl isocyanate, etc.; an aliphatic polyisocyanate compound such as ethylene diisocyanate, tetramethylene diisocyanate, hexamethylene diisocyanate (HDI), dodecamethylene diisocyanate, 1,6,11-undecanetriisocyanate, 2,2,4-trimethylhexamethylene diisocyanate, lysine diisocyanate, 2,6-methylcaproatediisocyanate, bis(2-isocyanateethyl)fumarate, bis(2-isocyanateethyl) carbonate, 2-isocyanateethyl-2,6-diisocyanate hexanoate, etc.; and an alicyclic polycyanate compound such as isophoronediisocyanate (IPDI), 4,4'-dicyclohexylmethane diisocyanate (hydrogen-added MDI), cyclohexylene diisocyanate, methylcyclohexylene diisocyanate (hydrogen added TDI), bis(2-isocyanateethyl)-4-cyclohexene-1,2-dicarboxylate, 2,5-norbomane diisocyanate, 2,6-norbomanediisocyanate diisocyanate, etc. These polyisocyanate compound may be used a single kind alone, or two or more kinds in combination.

A number of the isocyanate group of the polyisocyanate compound in one molecule is generally two, but a polyisocyanate having three or more isocyanate groups such as triphenylmethane triisocyanate may be used within the range in which the polyurethane resin of the the present invention is not gellated.

Among the above-mentioned polyisocyanate compounds, it preferably contains an alicyclic polyisocyanate compound in view of abrasion resistance, and of these, isophoronediisocyanate (IPDI) and/or 4,4'-dicyclohexylmethane diisocyanate (hydrogen-added MIDI) is/are particularly preferred in view of controlling reactivity and providing modulus of elasticity, etc.

### [(b) Polyol compound]

The (b) polyol compound which can be used in the present invention is a polyol compound containing a polycarbonate polyol having an alicyclic structure. The polyol compound having an acidic group is not to be contained in the (b). The polycarbonate polyol having an alicyclic structure is preferably 20% by weight or more, more preferably, 50% by weight or more in (b) the polyol compound.

The polycarbonate polyol having an alicyclic structure can be used those having a number average molecular weight of 400 to 3000. If the number average molecular weight is 400 or more, it can easily develop characteristics as a soft segment, and cracks difficultly occur when it is made a coating film. If the number average molecular weight is 3000 or less, a viscosity of the polycarbonate polyol can be easily made within a suitable range, handling of the material is easiy, and the problems that a viscosity of (A) the polyurethane prepolymer obtained by reacting (a) the polyisocyanate compound, (b) the polyol compound including the polycarbonate polyol and (c) the polyol having an acidic group becomes high and dispersion in water is difficult hardly occur. In the viewpoints of characteristics (abrasion resistance, toughness and flexibility) of the coated film and preparation of the aqueous polyurethane resin dispersion, the number average molecular weight of the polycarbonate polyol is preferably 500 to 2000, and most preferably 800 to 1100.

In the present invention, the solid content means the polyurethane resin and salt portions in which the aqueous medium is excluded from the aqueous polyurethane resin dispersion.

In the present invention, a content of the alicyclic structure means, for example, when a cyclohexane ring is contained in the structure, a content of the cyclohexane residue, and in the case of a dicyclohexylmethane, a content of the cyclohexane residue. The cyclohexane residue means a structure of a cyclohexane ring in which a hydrogen atom at which a substituent is bound is excluded.

In the present invention, a number average molecular weight of the polycarbonate polyol having an alicyclic structure can be calculated out from a number of the hydroxyl groups possessed by the polycarbonate polyol in the molecule, and a hydroxyl value (mg KOH/g) of the polycarbonate polyol. For example, when a number N hydroxyl groups are present in a molecule, it can be calculated from the following formula with a hydroxyl value.
Number average molecular weight = (56100×N)/(a hydroxyl value of the polycarbonate polyol)

By using a polycarbonate polyol having an alicyclic structure, in addition to water resistance, heat resistance, oil resistance and weather resistance caused by the carbonate structure, modulus of elasticity of the coating film is increased due to the alicyclic structure, whereby it develops excellent characteristics such as hardness, abrasion resistance and the like.

The polycarbonate polyol having an alicyclic structure may be any material so long as it satisfies the requirements as regulated above, preferably a polycarbonate polyol obtained by reacting a polyol (which is to be contained at least one polyol having an alicyclic structure) and a carbonate. The polyol having an alicyclic structure is not particularly limited, and there may be mentioned, for example, a polyol having an alicyclic group having 5 to 12 carbon atoms, etc. More specifically, there may be mentioned 1,4-cyclohexanedimethanol, 1,3-cyclohexanedimethanol, 1,4-cyclohexanediol, 1,3-cyclopentanediol, 1,4-cycloheptanediol, 2,5-bis(hydroxymethyl)-1,4-dioxane, 2,7-norbomanediol, tetrahydrofurandimethanol, 1,4-bis(hydroxyethoxy)cyclohexane, etc., and of these, 1,4-cyclohexanedimethanol is preferred since it can be easily obtained.

Moreover, the polycarbonate polyol having an alicyclic structure may have a structure based on a polyol having no alicyclic structure in the molecule. Such a polyol is not particularly limited, and there may be mentioned, for example, an aliphatic polyol, and, for example, an aliphatic polyol having 3 to 12 carbon atoms. More specifically, there may be mentioned an aliphatic polyol such as 1,6-hexanediol, 1,5-pentanediol, 2-ethyl-1,6-hexanediol, 1,4-butanediol, 1,9-nonanediol, 3-methyl-1,5-pentanediol, 2-methyl-1,8-octanediol, diethylene glycol, triethylene glycol, tetraethylene glycol, etc.

When a polycarbonate polyol obtained from a polyol having an alicyclic structure and a carbonate is used, a viscosity of the resulting (A) prepolymer becomes high in some cases. Thus, it is preferred to use a polycarbonate polyol obtained by polyols using a polyol having an alicyclic structure and an aliphatic polyol having no alicyclic structure in combination.

The carbonate is not particularly limited and there may be mentioned, for example, an aliphatic carbonate such as dimethyl carbonate, diethyl carbonate, etc., an aromatic carbonate such as diphenyl carbonate, etc., and a cyclic carbonate such as ethylene carbonate, etc. Also, phosgene which can form the similar polycarbonate polyol can be used. Of these, in view of easiness in preparation of a polycarbonate polyol, an aliphatic carbonate is preferred, and dimethyl carbonate is particularly preferred.

For preparing a polycarbonate polyol from a polyol(s) and a carbonate(s), for example, there is a method in which a polyol with an excessive molar number based on a molar number of a carbonate are charged in a reactor, and reacted at a temperature of 130 to 220°C and a pressure of 50 to 760 mmHg for 5 to 6 hours, and thereafter, further reacted at a pressure of several mmHg or less at 160 to 240°C for several hours. In the above-mentioned reaction, it is preferred to carry out the reaction while a by-producing alcohol is removed from the reaction system. At that time, when the carbonate is removed with the by-producing alcohol by azeotropic distillation out of the reaction system, it is necessary to charge the carbonate with an excess amount. Also, in the above-mentioned reaction, a catalyst such as titanium tetrabutoxide, etc., may be used.

The preparation method of the polycarbonate polyol is not particularly limited, and there may be mentioned, for example, a preparation method in which a polyol having an alicyclic structure and a carbonate are subjected to transesterification reaction, a preparation method in which a polyol having no alicyclic structure, a polyol having an alicyclic structure and a carbonate are subjected to transesterification reaction, a preparation method in which a polycarbonate polyol obtained by subjecting a polyol having no alicyclic structure and a carbonate to transesterification reaction, and a polyol having an alicyclic structure are subjected to transesterification reaction, a preparation method in which a polycarbonate polyol obtained by subjecting a polyol having an alicyclic structure and a carbonate to transesterification reaction, and a polyol having no alicyclic structure are subjected to transesterification reaction, a preparation method in which a polycarbonate polyol obtained by subjecting a polyol having an alicyclic structure and a carbonate to transesterification reaction, and a polycarbonate polyol obtained by subjecting a polyol having no alicyclic structure and a carbonate to transesterification reaction are subjected to transesterification reaction, etc.

As the polycarbonate polyol, a polycarbonate polyol obtained by reacting a polyol containing cyclohexanedimethanol and a carbonate is preferred. Of these, among units derived from a polyol containing cyclohexanedimethanol, a polycarbonate polyol containing 20 mol% or more of a unit derived from cyclohexanedimethanol is preferred. Such a polycarbonate polyol can be obtained by using 20 mol% or more of cyclohexanedimethanol as a starting material based on the total polyols.

In the present invention, (b) the polyol compound contains at least one kind of a polycarbonate polyol having an alicyclic structure. The polycarbonate polyol having an alicyclic structure may be used a single kind alone, or two or more kinds in combination. Also, other polyol compound(s) may be used with the polycarbonate polyol having an alicyclic structure within the range which does not impair the characteristics of the aqueous polyurethane resin dispersion. The other polyol compounds may be mentioned a high molecular weight polyol or a low molecular weight polyol. The high molecular weight polyol is not particularly limited, and there may be used those having a number average molecular weight of 400 to 4000 (the number average molecular weight can be obtained from a hydroxyl value in the same manner as in the polycarbonate polyol). More specifically, a polycarbonate polyol, a polyester polyol, a polyether polyol and/or an acryl polyol may be used suitably. The polycarbonate polyol is not particularly limited, and there may be mentioned, for example, polytetramethylene carbonatediol, polyhexamethylene carbonatediol, etc. The polyester polyol is not particularly limited, and there may be mentioned, for example, polyethylene adipate diol, polybutylene adipate diol, polyethylene butylene adipate diol, polyhexamethylene isophthalate adipate diol, polyethylene succinate diol, polybutylene succinate diol, polyethylene sebacate diol, polybutylene sebacate diol, poly-ε-caprolactone diol, poly(3-methyl-1,5-pentylene adipate)diol, a polycondensate of 1,6-hexanediol and a dimeric acid, etc. The polyether polyol is not particularly limited, and there may be mentioned, for example, polyethyleneglycol, polypropylene glycol, polytetramethylene glycol, a random copolymer or a block copolymer of ethyleneoxide and propylene oxide, or ethyleneoxide and butyleneoxide, etc. Moreover, a polyether polyester polyol having an ether bond and an ester bond may be used. The low molecular weight polyol is not particularly limited, and there may be mentioned ethyleneglycol, 1,4-butanediol, 1,5-pentanediol, 3-methyl-1,5-pentanediol, 1,6-hexanediol, 1,9-nonanediol, 2-methyl-1,8-octanediol, 1,4-cyclohexanedimethanol, 1,3-cyclohexanedimethanol, 1,4-cyclohexanediol, etc. Moreover, a low molecular weight polyvalent alcohol such as trimethylolpropane, pentaerythritol, sorbitol, etc., may be used. Other polyol(s) may be used a single kind alone, or two or more kinds in combination.

### [(c) Polyol compound having an acidic group]

In the present invention, (c) the polyol compound having an acidic group is a polyol compound having at least one acidic group in the molecule. The acidic group is not particularly limited, and there may be mentioned a carboxyl group, sulfonyl group, phosphorous acid, phenolic hydroxyl group, etc. Of these, a carboxyl group is preferred in view of stability and coloring property of the resulting coating film, and reactivity when it is made a curable composition.

(c) The polyol compound having an acidic group which can be used in the present invention is not particularly limited, and there may be more specifically mentioned a dimethylol alkanoic acid such as 2,2-dimethylolpropionic acid, 2,2-dimethylolbutanoic acid, etc., N,N-bishydroxyethylglycine, N.N-bishydroxyethylalanine, 3,4-dihydroxybutanesulfonic acid, 3,6-dihydroxy-2-toluenesulfonic acid, etc. Of these, an alkanoic acid (dimethylolalkanoic acid) having 4 to 12 carbon atoms and containing 2 methylol groups in the viewpoint that it can be obtained easily, and 2,2-dimethylolpropionic acid is particularly preferred.

A weight ratio of the acidic group in (c) the polyol compound having an acidic group is particularly important to ensure dispersibility of the urethane prepolymer obtained from a polycarbonate polyol having an alicyclic structure and stability of the aqueous polyurethane resin dispersion. The weight ratio of the acidic group in the polyol compound having an acidic group is preferably 2.0 to 13% by weight based on the solid component of (A) the polyurethane prepolymer obtained by reacting (a) the polyisocyanate compound, (b) the polyol compound containing a polycarbonate polyol having an alicyclic structure, and (c) the polyol compound having an acidic group. Since a cohesive force of the polycarbonate polyol is large, when the weight ratio of the acidic group is too small, (A) the polyurethane prepolymer is difficultly dispersed in an aqueous medium. However, if it is in the above range, the problem of dispersibility can be easily avoided, and dispersion stability of the resulting aqueous polyurethane dispersion can be ensured. Also, when the weight ratio of the acidic group is too large, hydrolysis resistance of the coated film is likely lowered. However, if it is in the above range, hydrolysis resistance can be ensured. It is more preferably 2.0 to 6.0% by weight, and particularly preferably 2.0 to 4.0% by weight.

### [(A) Polyurethane prepolymer]

(A) The polyurethane prepolymer of the present invention is a material obtained by reacting (a) the polyisocyanate compound, (b) the polyol compound containing a polycarbonate polyol having an alicyclic structure and (c) the polyol compound having an acidic group.

(A) The polyurethane prepolymer may be prepared by any of preparation methods, and in view of handling property, preferred is a method in which a mixture of (b) the polyol compound containing a polycarbonate polyol having an alicyclic structure and (c) the polyol compound having an acidic group is reacted with (a) the polyisocyanate compound.

It is preferred that a ratio of a molar number of the isocyanate group of (a) the polyisocyanate compound based on a total molar number of the hydroxyl groups of (b) the polyol compound containing a polycarbonate polyol having an alicyclic structure and (c) the polyol compound having an acidic group is 1.1 to 2.5. If the ratio is within the range, a molar number of the hydroxyl group of the polyol component is not so many, and a number of molecules having no isocyanate group at the molecule end becomes large, whereby the problem that molecules which do not react with a chain elongating agent become large can be avoided, and lowering in strength of a coaring film obtained by coating the aqueous polyurethane resin dispersion of the present invention can be easily avoided. Also, when the ratio of the the molar number of the hydroxyl group of the polyol components and the molar number of the polyisocyanate is close to 1, accompanying with increase in the molecular weight of (A) the polyurethane prepolymer, because of the hard alicyclic structure of the polycarbonate diol, a viscoty of the urethane prepolymer is extremely high and dispersion in water becomes difficult in some cases, but such problems can be easily avoided. Further, if the ratio is within the range, a molar number of the hydroxyl group of the polyol component is not too little, and the problems that unreacted (a) polyisocyanate compound remains in the reaction system with a large amount, and when the urethane prepolymer is dispersed in water, it forms a coagulate by the reaction with water to cause lowering in characteristics, or causes to have high modulus of elasticity by the reaction with the chain elongating agent can be easily avoided. The ratio of the molar number of the isocyanate group of (a) the polyisocyanate compound based on the total molar number of the hydroxyl groups of (b) the polyol compound containing a polycarbonate polyol having an alicyclic structure and (c) the polyol compound having an acidic group is more preferably 1.2 to 2.2, particularly preferably 1.3 to 2.0.

When (A) the polyurethane prepolymer is to be obtained by reacting (a) the polyisocyanate compound, (b) the polyol compound containing a polycarbonate polyol having an alicyclic structure and (c) the polyol compound having an acidic group, a catalyst may be used.

The catalyst is not particularly limited, and there may be mentioned, for example, a salt of a metal and an organic and inorganic acid such as a tin series catalyst (trimethyl tin laurate, dibutyl tin dilaurate, etc.) or a lead series catalyst (lead octylate, etc.), etc., and an organometallic derivative, amine series catalyst (triethylamine, N-ethylmorpholine, triethylenediamine, etc.), diazabicycloundecene series catalyst, etc. Of these, dibutyl tin dilaurate is preferred in view of reactivity.

Reaction of (a) the polyisocyanate compound, (b) a polyol compound containing a polycarbonate polyol having an alicyclic structure, and (c) a polyol compound having an acidic group may be carried out without solvent or may be carried out by adding an organic solvent. The organic solvent may be mentioned acetone, methyl ethyl ketone, methyl isobutyl ketone, tetrahydrofuran, dioxane, dimethylformamide, dimethylsulfoxide, N-methylpyrrolidone, N-ethylpyrrolidone, ethyl acetate, etc. Of these, acetone, methylethyl ketone and/or ethyl acetate is/are preferred since they can be removed by heating under reduced pressure after dispersing the polyurethane prepolymer in water and applying to chain-elongation reaction. Also, N-methylpyrrolidone and/or N-ethylpyrrolidone is/are preferred since they act as a film formation aid when a coating film of the resulting aqueous polyurethane dispersion is formed.

According to the reaction of (a) the polyisocyanate compound, (b) the polyol compound containing a polycarbonate polyol having an alicyclic structure and (c) the polyol compound having an acidic group, (A) the polyurethane prepolymer having an isocyanate group(s) at the end(s) can be obtained without solvent or as an organic solvent solution. When a viscosity of the urethane prepolymer is high, and dispersion in water is difficult, it is diluted by using an organic solvent to enhance dispersibility. Here, the organic solvent to be used may be mentioned those used at the time of preparing (A) the polyurethane prepolymer.

To disperse (A) the polyurethane prepolymer in water, the acidic group derived from (c) the polyol compound having an acidic group contained in the polyurethane prepolymer can be neutralized by adding a basic component to the urethane prepolymer solution. The basic component to be used for the neutralization may be mentioned an organic amine such as trimethylamine, triethylamine, triisopropylamine, tributylamine, triethanolamine, N-methyldiethanolamine, N-phenyldiethanolamine, dimethylethanolamine, diethylethanolamine, N-methylmorpholine, pyridine, etc., an inorganic alkali such as sodium hydroxide, potassium hydroxide, etc., and ammonia, etc. Of these, preferred is an organic amine, and particularly preferred is triethylamine. As the addition method, preferred is a method in which a basic component is directly added or added as an aqueous solution to the polyurethane prepolymer solution, and an amount to be added can be made 0.5 to 2-fold equivalent based on the amount of the acidic group in the polyurethane prepolymer, preferably 0.7 to 1.5-fold equivalent, and particularly preferably 0.85 to 1.3-fold equivalent.

### [(B) Chain elongating agent having reactivity with (A) polyurethane prepolymer]

(B) The chain elongating agent in the present invention is preferably a compound having two or more active hydrogen atoms in the molecule, which have reactivity with the isocyanate group of (A) the polyurethane prepolymer. Such a chain elongating agent may be mentioned, for example, a polyamine compound or a polyol compound having two or more primary or secondary amino groups in the molecule. The polyamine compound may be mentioned hydrazine, ethylenediamine, 1,3-propanediamine, 1,2-propanediamine, 1,4-butanediamine, 1,6-hexanediamine, 2-methyl-1,5-pentanediamine, diethylenetriamine, triethylenetetramine, 3-aminomethyl-3,5,5-trimethylcyclohexylamine, 1,3-bis(aminomethyl)cyclohexane, piperazine, 2,5-dimethylpiperazine, diaminodiphenylmethane, tolylenediamine, xylylenediamine, isophoronediamine, norboranediamine, etc. The polyol compound may be mentioned ethyleneglycol, propylene glycol, 1,4-butanediol, 1,6-hexanediol, 1,4-cyclohexanediol, 1,4-cyclohexanedimethanol, 1,3-cyclohexanedimethanol, trimethylolpropane, pentaerythritol, etc. The chain elongating agent may be used a single kind alone or two or more kinds in combination. Of these, preferred is a polyamine compound, particularly preferred is a polyamine compound containing primary amino groups, and 2-methyl-1,5-pentanediamine is preferred in view of industrial availability.

### [Aqueous polyurethane resin dispersion]

The aqueous polyurethane resin dispersion of the present invention is in a state in which the polyurethane resin obtained by reacting (A) the polyurethane prepolymer and (B) a chain elongating agent being dispersed in an aqueous medium. The aqueous medium may be mentioned water, a mixed medium of water and a hydrophilic organic solvent, etc. The water may be mentioned, for example, tap water, deionized water, distilled water, ultra pure water, etc. Of these, deionized water is preferably used in view of easily obtainable and preventing particles from being unstable due the effect of a salt, etc. The hydrophilic organic solvent may be mentioned a lower monovalent alcohol such as methanol, ethanol, propanol, etc.; a polyvalent alcohol such as ethyleneglycol, glycerine, etc.; and an aprotic hydrophilic organic solvent such as N-methylmorpholine, dimethylsulfoxide, dimethylformamide, N-methylpyrrolidone, etc. An amount of the hydrophilic organic solvent in an aqueous medium is preferably 20% by weight or less.

The aqueous polyurethane resin dispersion of the present invention can be prepared by
(α) a step of reacting (a) the polyisocyanate compound, (b) the polyol compound containing a polycarbonate polyol having an alicyclic structure and (c) the polyol compound having an acidic group to obtain (A) the polyurethane prepolymer;
(β) a step of neutralizing an acidic group of (A) the polyurethane prepolymer;
(γ) a step of dispersing the polyurethane prepolymer in an aqueous medium; and
(δ) a step of reacting the isocyanate group of (A) the polyurethane prepolymer and (B) a chain elongating agent to obtain an aqueous polyurethane resin.

Step (β) of neutralizing the acidic group of (A) the polyurethane prepolymer, and Step (γ) of dispersing (A) the polyurethane prepolymer in an aqueous medium may be carried out simultaneously, and Step (γ) of dispersing (A) the polyurethane prepolymer in an aqueous medium, and Step (δ) of reacting with (B) a chain elongating agent to obtain an aqueous polyurethane resin may be carried out simultaneously.

The method for dispersing (A) the polyurethane prepolymer in an aqueous medium is not particularly limited, and can be carried out by adding a urethane prepolymer or urethane prepolymer solution to an aqueous medium while stirring the aqueous medium by a homomixer or a homogenizer. Also, an aqueous medium may be added to a polyurethane prepolymer solution. At this time, it is preferred to be a ratio of the polyurethane resin in the aqueous polyurethane resin dispersion being 5 to 60% by weight, more preferably 20 to 50% by weight.

The polyurethane resin of the present invention can be obtained by reacting (A) the polyurethane prepolymer and (B) the chain elongating agent. A reaction temperature is generally 0 to 50°C, preferably 0 to 40°C, and a reaction time is, for example, 0.1 to 5 hours, and preferably 0.2 to 3 hours.

An amount of (B) the chain elongating agent to be added is preferably an equivalent amount or less of the isocyanate group which become a starting point of chain-elongation in the obtaining urethane polymer. If the amount of (B) the chain elongating agent to be added is an equivalent amount or less of the isocyanate group, it can be easily avoided to lower strength of a coating film due to lowering of a molecular weight of the urethane polymer obtained by chain-elongation. Addition of (B) the chain elongating agent may be after dispersing (A) the polyurethane prepolymer in an aqueous medium, or may be during the dispersing procedure. Chain-elongation can be carried out also by water. In this case, water as a dispersing medium also acts as a chain elongating agent.

A content of an alicyclic structure in the aqueous polyurethane resin dispersion of the present invention is in terms of a solid component(s) 26 to 60% by weight, preferably 27 to 55% by weight, particularly preferably 28 to 52% by weight, and most preferably 28 to 43% by weight. The solid component corresponds to a value in which an aqueous and organic solvent are subtracted from the aqueous polyurethane resin dispersion.

A content of the alicyclic structure is a value in which a molar concentration (mol/g) of the alicyclic structure is calculated from a charged ratio of respective starting materials of the aqueous polyurethane resin dispersion, and is converted to a weight ratio. If the content of the alicyclic structure is less than 26% by weight, abrasion resistance is insufficient, while if the ratio of the alicyclic structure exceeds 60% by weight, dispersibility of the aqueous polyurethane resin dispersion becomes worse, the median diameter of the particles becomes larger or the dispersion is gellated in some cases.

A sum of the content of the urethane boding and the content of the urea bonding of the aqueous polyurethane resin dispersion according to the present invention is in terms of a solid component(s) 17.7 to 30.0% by weight, preferably 17.7 to 25.0% by weight, particularly preferably 17.7 to 23.0% by weight, and most preferably 18 to 22% by weight. The sum of the content of the urethane boding and the content of the urea bonding is a value in which a molar concentration (mol/g) of the urethane boding and urea bonding is calculated from a charged ratio of respective starting materials of the aqueous polyurethane resin dispersion, and is converted to a weight ratio. The weights of the urethane boding and urea bonding are calculated as 59.03 g and 58.05 g per 1 mol, respectively. If the sum of the content of the urethane boding and the content of the urea bonding is less than 17.7% by weight, abrasion resistance becomes worse, while if the sum of the content of the urethane boding and the content of the urea bonding is higher than 30.0% by weight, dispersibility of the aqueous polyurethane resin dispersion becomes worse, the median diameter of the particles becomes larger or the dispersion is gellated in some cases.

### [Coating composition]

The present invention also relates to a coating composition containing the above-mentioned aqueous polyurethane resin dispersion. In the coating composition of the present invention, a resin (other resin) other than the aqueous polyurethane resin dispersion, a curing agent, etc., may be formulated. An amount of the aqueous polyurethane resin dispersion in the coating composition is preferably 5 to 60% by weight, more preferably 10 to 40% by weight.

Other resins may be mentioned a polyester resin, acryl resin, polyether resin, polycarbonate resin, polyurethane resin, epoxy resin, alkyd resin, etc. These may be used a single kind alone or two or more kinds in combination. The other resin preferably has 1 or more hydrophilic groups. The hydrophilic group may be mentioned a hydroxyl group, carboxyl group, sulfonic acid group, etc. The other resin is preferably at least one selected from the group consisting of a polyester resin and an acryl resin.

When the polyester resin and the acryl resin have a hydroxyl group, the socalled urethane-modified polyester resin or urethane-modified acryl resin may be used in combination, in which a part or whole of the hydroxyl groups in the resin and a polyisocyanate compound are subjected to urethanization reaction to elongating the chain of these resins to obtain high molecular-weighted ones.

The polyester resin can be generally prepared by esterification reaction or transesterification reaction of an acid component and an alcohol component.

As the acid component, a compound which is generally used as an acid component at the time of preparation of the polyester resin can be used. The acid component may be used, for example, an aliphatic polybasic acid, alicyclic polybasic acid, aromatic polybasic acid, etc.

A hydroxyl value of the polyester resin is preferably 10 to 300 mg KOH/g or so, more preferably 50 to 250 mg KOH/g or so, further preferably 80 to 180 mg KOH/g or so. An acid value of the polyester resin is preferably 1 to 200 mg KOH/g or so, more preferably 15 to 100 mg KOH/g or so, further preferably 25 to 60 mg KOH/g or so. A weight average molecular weight of the polyester resin is preferably 500 to 50,000, more preferably 1,000 to 30,000, further preferably 1,500 to 20,000. In the present specification, the weight average molecular weight is a value measured by gel permeation chromatography (in terms of polystyrene).

As the acryl resin, a hydroxyl group-containing acrylic resin is preferred. The hydroxyl group-containing acrylic resin can be prepared by copolymerizing a hydroxyl group-containing polymerizable unsaturated monomer and other polymerizable unsaturated monomer which is copolymerizable with the hydroxyl group-containing polymerizable unsaturated monomer, for example, by a known method such as a solution polymerization method in an organic solvent, an emulsion polymerization method in water, etc.

The hydroxyl group-containing polymerizable unsaturated monomer is a compound having each one or more hydroxyl group and polymerizable unsaturated bond in one molecule, and there may be mentioned, for example, a monoesterified product of a (meth)acrylic acid and a divalent alcohol having 2 to 8 carbon atoms such as 2-hydroxyethyl(meth)acrylate, 2-hydroxypropyl(meth)acrylate, 3-hydroxypropyl-(meth)acrylate, 4-hydroxybutyl(meth)acrylate, etc.; an ε-caprolactone modified product of these monoesterified products; N-hydroxymethyl(meth)acrylamide; allyl alcohol; a (meth)acrylate having a polyoxyethylene chain in which a molecular end(s) is/are a hydroxyl group(s), etc. Other polymerizable unsaturated monomer which is copolymerizable with the hydroxyl group-containing polymerizable unsaturated monomer may be mentioned, for example, a aliphatic (meth)acrylate such as methyl(meth)acrylate, ethyl(meth)acrylate, n-propyl(meth)acrylate, isopropyl(meth)acrylate, n-butyl(meth)-acrylate, isobutyl(meth)acrylate, t-butyl(meth)acrylate, n-hexyl(meth)acrylate, n-octyl-(meth)acrylate, 2-ethylhexyl(meth)acrylate, nonyl(meth)acrylate, lauryl(meth)acrylate, stearyl (meth)acrylate, cyclohexyl (meth)acrylate, 1,6-hexanediol di(meth)acrylate, allyl (meth)acrylate, etc., an aromatic vinyl compound such as styrene, vinyl toluene, etc., a polymerizable unsaturated monomer having an alkoxysilyl group such as vinyl trimethoxysilane, vinyl triethoxysilane, γ-(meth)acryloyloxypropyl trimethoxysilane, etc., a vinyl compound such as ethylene, butadiene, chloroprene, vinyl propionate, vinyl acetate, etc., a carboxyl group-containing polymerizable unsaturated monomer such as (meth)acrylic acid, maleic acid, crotonic acid, β-carboxyethyl acrylate, etc., an epoxy group-containing unsaturated monomer such as glycidyl (meth)acrylate, 3,4-epoxycyclohexylmethyl (meth)acrylate, allylglycidyl ether, etc.

The hydroxyl group-containing acrylic resin preferably has a cationic functional group. With regard to the hydroxyl group-containing acrylic resin having a cationic functional group, it can be prepared by, for example, using a polymerizable unsaturated monomer having a cationic functional group such as a tertiary amino group, quaternary ammonium salt group, etc., as a kind of the above-mentioned polymerizable unsaturated monomer.
The hydroxyl group-containing acrylic resin preferably has a cationic functional group. The hydroxyl group-containing acrylic resin having a cationic functional group can be prepared by using, for example, a polymerizable unsaturated monomer having a cationic functional group such as a tertiary amino group, quaternary ammonium salt group, etc., as a kind of a polymerizable unsaturated monomer.

A hydroxyl value of the hydroxyl group-containing acrylic resin is preferably 1 to 200 mg KOH/g or so in view of storage stability or water resistance of the resulting coating film, etc., more preferably 2 to 100 mg KOH/g or so, and further preferably 3 to 60 mg KOH/g or so.

Also, when the hydroxyl group-containing acrylic resin has an acidic group such as a carboxyl group, etc., an acid value of said hydroxyl group-containing acrylic resin is preferably 1 to 200 mg KOH/g or so in view of water resistance, etc., of the resulting coating film, more preferably 2 to 150 mg KOH/g or so, and further preferably 5 to 100 mg KOH/g or so. A weight average molecular weight of the hydroxyl group-containing acrylic resin is preferably 1,000 to 200,000, more preferably 2,000 to 100,000, and further it is suitable in the range of preferably 3,000 to 50,000.

The polyether resin may be mentioned a polymer or copolymer having an ether bond, and, specifically mentioned, for example, a polyoxyethylene series polyether, a polyoxypropylene series polyether, a polyoxybutylene series polyether, a polyether derived from an aromatic polyhydroxy compound such as bisphenol A, bisphenol F, etc.

The polycarbonate resin may be mentioned a polymer prepared by a bisphenol compound, and, for example, bisphenol A polycarbonate, etc., may be mentioned.

The polyurethane resin may be mentioned a resin having an urethane bonding which is obtained by the reaction of various kinds of polyol components such as acryl polyol, polyester polyol, polyether polyol, polycarbonate polyol, etc., and a polyisocyanate compound.

The epoxy resin may be mentioned a resin obtained by the reaction of a bisphenol compound and epichlorohydrin, etc. As the bisphenol compound, there may be mentioned, for example, bisphenol A and bisphenol F.

The alkyd resin may be mentioned an alkyd resin obtained by reacting a polybasic acid such as phthalic acid, terephthalic acid, succinic acid, etc., and a polyvalent alcohol, and further with a modifying agent such as oil and fats, oil and fats aliphatic acid (soybean oil, linseed oil, palm oil, stearic acid, etc.), a natural resin (rosin, amber, etc.), etc.

When a curing agent is added to the coating composition of the present invention, water resistance, etc., of the coating film or plural-layered coating film prepared by using the above-mentioned coating composition can be improved. The curing agent may be used, for example, an amino resin, polyisocyanate compound, blocked polyisocyanate compound, melamine resin, carbodiimide, etc. The curing agent may be used a single kind alone, or two or more kinds in combination.

The amino resin may be mentioned, for example, a partially or completely methylolated amino resin obtained by the reaction of an amino component and an aldehyde component. The amino component may be mentioned, for example, melamine, urea, benzoguanamine, acetoguanamine, steroguanamine, spiroguanamine, dicyane diamide, etc., and the aldehyde component may be mentioned, for example, formaldehyde, paraformaldehyde, acetaldehyde, benzaldehyde, etc.

As the polyisocyanate compound, there may be mentioned, for example, a compound having two or more isocyanate groups in one molecule, and there may be exemplified by, for example, hexamethylene diisocyanate, trimethylhexamethylene diisocyanate, etc.

The blocked polyisocyanate compound may be mentioned those obtained by adding a blocking agent to the polyisocyanate group of the above-mentioned polyisocyanate compound, and the blocking agent may be mentioned a blocking agent including a phenol series material such as phenol, cresol, etc., and an aliphatic alcohol series material such as methanol, ethanol, etc.

The melamine resin may be mentioned, for example, methylolmelamine such as dimethylolmelamine, trimethylolmelamine etc.; an alkyl etherified product or condensate of these methylolmelamines; a condensate of the alkyl etherified product of methylolmelamine, etc.

To the coating composition of the present invention, a colored pigment, an extender pigment, or a photoluminescent pigment may be further added.

As the above-mentioned colored pigment, there may be mentioned, for example, titanium oxide, zinc white, carbon black, molybdenum red, Prussian blue, cobalt blue, azo pigment, phthalocyanine pigment, quinacridone pigment, isoindoline pigment, styrene series pigment, perylene pigment, etc. They may be used a single kind alone or two more kinds in combination. In particular, it is preferred to use titanium oxide and/or carbon black as a colored pigment.

The above-mentioned extender pigment may be mentioned, for example, clay, kaolin, barium sulfate, barium carbonate, calcium carbonate, talc, silica, alumina white, etc. These may be used a single kind alone or two or more kinds in combination. In particular, it is preferably barium sulfate and/or talc as an extender pigment, and it is more preferably barium sulfate.

The above-mentioned photoluminescent pigment may be used, for example, aluminum, copper, zinc, brass, nickel, aluminum oxide, mica, aluminum oxide coated by titanium oxide or iron oxide, mica coated by titanium oxide or iron oxide, etc.

In the coating composition of the present invention, a usual additive for paint such as a thickening agent, curing catalyst, UV absorber, photostabilizer, defoaming agent, plasticizer, surface adjuster, anti-sediment agent, etc., may be used a single kind alone or two or more kinds in combination.

A preparation method of the coating composition of the present invention is not particularly limited, and a conventionally known preparation method may be employed. In general, the coating composition can be prepared by mixing the aqueous polyurethane resin dispersion, if necessary, with the other resin(s), the curing agent and the above-mentioned various kinds of additives, adding an aqueous medium, and regulating a viscosity suitable for the coating method.

As a material to be coated by the coating composition, a metal, plastic, inorganic material, etc., may be mentioned. As a coating method of the coating composition, there may be mentioned a bell coating, spray coating, roll coating, shower coating, dip coating, etc.

### EXAMPLES

In the following, the present invention is explained more specifically by referring to Examples, but the scope of the present invention is not limited by these.

### [Evaluation of characteristics of aqueous polyurethane resin dispersion]

### 1. Content of alicyclic structure

A molar concentration (mol/g) of an alicyclic structure is calculated from a charged ratio of respective starting materials of an aqueous polyurethane resin dispersion, and is converted into a weight ratio. The weight ratio is based on a solid component of a polyurethane resin in which a solvent (aqueous and organic series) is subtracted from the aqueous polyurethane resin dispersion.

### 2. Sum of content of urethane boding and content of urea bonding

Molar concentrations (mol/g) of a urethane boding and a urea bonding are calculated from a charged ratio of respective starting materials of an aqueous polyurethane resin dispersion, and is converted into a weight ratio. The weight ratio is based on a solid component of a polyurethane resin in which a solvent (aqueous and organic series) is subtracted from the aqueous polyurethane resin dispersion.

### 3. Median diameter of particles

By using a laser diffraction/scattering type particle size distribution analyzer LA-910 manufactured by HORIBA LTD., particle size distribution in the range of 0.02 µm to 1000 µm was measured in terms of a volume, and a median diameter was calculated.

### [Properties of polyurethane film]

### 1. Abrasion test

According to JIS-K5600-5-10, an abrasion resistance test was carried out. A shape of the test piece was made a width of 65 mm, a length of 100 mm, and a thickness of 0.13 mm, and as an abrasion ring, a rubber abrasion ring having a diameter of 50 mm, and a width of 12 mm was used and as a polishing paper, alumina series #180 was used. A load is made 600 g, and 400 times of reciprocating movement were carried out with a stroke of 30 mm and a speed of 40 times of reciprocating movement per 1 minute. A reduced amount of weight by abrasion was measured at the times of 50 times, 100 times, 200 times and 400 times of reciprocating movement.

### 2. Modulus of elasticity

According to JIS-K7311, a modulus of elasticity was measured by using a tensile test machine (TENSILON UCT-5T manufactured by ORIENTEC CORPORATION) under the condistions of 23°C and 50%RH.

### [Example 1]

### [Preparation of aqueous polyurethane resin dispersion (1)]

In a reaction vessel equipped with a stirrer, a reflux condenser and a thermometer were charged 1500 g of ETERNACOLL UM90 (3/1) (available from UBE INDUSTRIES, LTD., polycarbonate diol; number average molecular weight 916; hydroxyl value 122.5 mg KOH/g; a polycarbonate diol obtained by reacting a polyol mixture wherein the polyol component comprises 1,4-cyclohexanedimethanol:1,6-hexanediol=3:1 in a molar ratio and a carbonate), 220 g of 2,2-dimethylolpropionic acid (DMPA) and 1347 g ofN-methylpyrrolidone (NMP) under nitrogen stream. Thereafter, the mixture was heated to 60°C to confirm dissolution of DMPA. To the mixture were added 1445 g of 4,4'-dicyclohexylmethane diisocyanate (hydrogen-added MDI) and 2.6 g of dibutyl tin dilaurate (catalyst), and the mixture was heated to 90°C to carry out urethanization reaction for 5 hours to obtain a polyurethane prepolymer (the carboxylic acid group content in the prepolymer at this time was 2.38% by weight based on the solid component). An NCO group content in the prepolymer at the time of completion of the urethanization reaction was 3.97% by weight. The reaction mixture was cooled to 80°C, and 149 g of triethylamine was added thereto and mixed. 4340 g of the reaction mixture was extracted from the mixture and added into a mixed solution comprising 5400 g of water and 15 g of triethylamine while vigorously stirring. Then, 1500 g of ice was poured into the mixture, and 626 g of 35% by weight aqueous 2-methyl-1,5-pentanediamine solution was added to the same to carry out chain-elongation reaction to obtain an aqueous polyurethane resin dispersion. A content of the alicyclic structure, sum of a content of the urethane boding and a content of the urea bonding and a median diameter of the particles of the obtained aqueous polyurethane resin dispersion (1) are shown in Table 1. Incidentally, determination of the isocyanate group at the time of completion of the urethanization reaction was carried out as follows. To 10 mL (milliliter) of 0.1 mol/L (liter) dibutylamine·tetrahydrofuran (THF) solution was poured 0.5 g of the polyurethane prepolymer solution and dissolved therein, and further 40 mL of THF was added to the mixture. Neutralization titration was carried out with 0.1 mol/L hydrochloric acid by using Bromophenol Blue·methanol solution as an indicator. The concentration of the isocyanate group was calculated in terms of a weight from the obtained titration amount.

### [Preparation of polyurethane film (11)]

The aqueous polyurethane resin dispersion (1) was coated on a glass plate, and dried at 120°C for 3 hours. A thickness of the resulting polyurethane film (11) was 0.13 mm, and an abrasion amount by the abrasion test and a modulus of elasticity by the tensile test are shown in Table 2.

### [Example 2]

### [Preparation of aqueous polyurethane resin dispersion (2)]

In the reaction vessel similar to that of Example 1 were charged 1267 g of ETERNACOLL UM90 (3/1) (available from UBE INDUSTRIES, LTD., polycarbonate diol; number average molecular weight 916; hydroxyl value 122.5 mg KOH/g; a polycarbonate diol obtained by reacting a polyol mixture wherein the polyol component comprises 1,4-cyclohexanedimethanol:1,6-hexanediol=3:1 in a molar ratio and a carbonate), 43.5 g of 1,4-butanediol, 250 g of 2,2-dimethylolpropionic acid (DMPA) and 1368 g of N-methylpyrrolidone (NMP) under nitrogen stream. Thereafter, the mixture was heated to 60°C to confirm dissolution of DMPA. To the mixture were added 1640 g of 4,4'-dicyclohexylmethane diisocyanate (hydrogen-added MDI) and 2.6 g of dibutyl tin dilaurate (catalyst), and the mixture was heated to 90°C to carry out urethanization reaction for 5 hours to obtain a polyurethane prepolymer (the carboxylic acid group content in the prepolymer at this time was 2.66% by weight based on the solid component). An NCO group content at the time of completion of the urethanization reaction was 4.53% by weight. The reaction mixture was cooled to 80°C, and 170 g of triethylamine was added thereto and mixed. 4461 g of the reaction mixture was extracted from the mixture and added into a mixed solution comprising 5500 g of water and 17.4 g of triethylamine while vigorously stirring. Then, 1510 g of ice was poured into the mixture, and 731 g of 35% by weight aqueous 2-methyl-1,5-pentanediamine solution was added to the same to carry out chain-elongation reaction to obtain an aqueous polyurethane resin dispersion. A content of the alicyclic structure, sum of a content of the urethane boding and a content of the urea bonding and a median diameter of the particles of the obtained aqueous polyurethane resin dispersion (2) are shown in Table 1.

### [Preparation of polyurethane film (22)]

In the same manner as in Example 1, a polyurethane film was prepared from the aqueous polyurethane resin dispersion (2). An abrasion amount by the abrasion test and a modulus of elasticity by the tensile test of the obtained polyurethane film (22) are shown in Table 2.

### [Example 3]

### [Preparation of aqueous polyurethane resin dispersion (3)]

In the reaction vessel similar to that of Example 1 were charged 150 g of ETERNACOLL UM90 (3%1) (available from UBE INDUSTRIES, LTD., polycarbonate diol; number average molecular weight 916; hydroxyl value 122.5 mg KOH/g; a polycarbonate diol obtained by reacting a polyol mixture wherein the polyol component comprises 1,4-cyclohexanedimethanol:1,6-hexanediol=3:1in a molar ratio and a carbonate), 7.46 g of 1,4-butanediol, 39.9 g of 2,2-dimethylolpropionic acid (DMPA) and 186 g of N-methylpyrrolidone (NMP) under nitrogen stream. Thereafter, the mixture was heated to 60°C to confirm dissolution of DMPA. To the mixture were added 239 g of 4,4'-dicyclohexylmethane diisocyanate (hydrogen-added MDI) and 0.35 g of dibutyl tin dilaurate (catalyst), and the mixture was heated to 90°C to carry out urethanization reaction for 5 hours to obtain a polyurethane prepolymer (the carboxylic acid group content in the prepolymer at this time was 3.10% by weight based on the solid component). An NCO group content at the time of completion of the urethanization reaction was 4.81% by weight. The reaction mixture was cooled to 80°C, and 26.4 g of triethylamine was added thereto and mixed. 582 g of the reaction mixture was extracted from the mixture and added into a mixed solution comprising 726 g of water and 2.56 g of triethylamine while vigorously stirring. Then, 204g of ice was poured into the mixture, and 103 g of 35% by weight aqueous 2-methyl-1,5-pentanediamine solution was added to the same to carry out chain-elongation reaction to obtain an aqueous polyurethane resin dispersion. A content of the alicyclic structure, sum of a content of the urethane boding and a content of the urea bonding and a median diameter of the particles of the obtained aqueous polyurethane resin dispersion (3) are shown in Table 1.

### [Preparation of polyurethane film (33)]

In the same manner as in Example 1, a polyurethane film was prepared from the aqueous polyurethane resin dispersion (3). An abrasion amount by the abrasion test and a modulus of elasticity by the tensile test of the obtained polyurethane film (33) are shown in Table 2.

### [Example 4]

### [Preparation of aqueous polyurethane resin dispersion (4)]

In the reaction vessel similar to that of Example 1 were charged 150 g of ETERNACOLL UM90 (1/1) (available from UBE INDUSTRIES, LTD., polycarbonate diol; number average molecular weight 914; hydroxyl value 122.8 mg KOH/g; a polycarbonate diol obtained by reacting a polyol mixture wherein the polyol component comprises 1,4-cyclohexanedimethanol:1,6-hexanediol=1:1 in a molar ratio and a carbonate), 7.46 g of 1,4-butanediol, 39.9 g of 2,2-dimethylolpropionic acid (DMPA) and 186 g of N-methylpyrrolidone (NMP) under nitrogen stream. Thereafter, the mixture was heated to 60°C to confirm dissolution of DMPA. To the mixture were added 239 g of 4,4'-dicyclohexylmethane diisocyanate (hydrogen-added MDI) and 0.34 g of dibutyl tin dilaurate (catalyst), and the mixture was heated to 90°C to carry out urethanization reaction for 5 hours to obtain a polyurethane prepolymer (the carboxylic acid group content in the prepolymer at this time was 3.10% by weight based on the solid component). An NCO group content at the time of completion of the urethanization reaction was 4.77% by weight. The reaction mixture was cooled to 80°C, and 26.9 g of triethylamine was added thereto and mixed. 604 g of the reaction mixture was extracted from the mixture and added into a mixed solution comprising 747 g of water and 2.49 g of triethylamine while vigorously stirring. Then, 204g of ice was poured into the mixture, and 105 g of 35% by weight aqueous 2-methyl-1,5-pentanediamine solution was added to the same to carry out chain-elongation reaction to obtain an aqueous polyurethane resin dispersion. A content of the alicyclic structure, sum of a content of the urethane boding and a content of the urea bonding and a median diameter of the particles of the obtained aqueous polyurethane resin dispersion (4) are shown in Table 1.

### [Preparation of polyurethane film (44)]

In the same manner as in Example 1, a polyurethane film was prepared from the aqueous polyurethane resin dispersion (4). An abrasion amount by the abrasion test and a modulus of elasticity by the tensile test of the obtained polyurethane film (44) are shown in Table 2.

### [Example 5]

### [Preparation of aqueous polyurethane resin dispersion (5)]

In the reaction vessel similar to that of Example 1 were charged 150 g of ETERNACOLL UM90 (1/3) (available from UBE INDUSTRIES, LTD., polycarbonate diol; number average molecular weight 894; hydroxyl value 125.5 mg KOH/g; a polycarbonate diol obtained by reacting a polyol mixture wherein the polyol component comprises 1,4-cyclohexanedimethanol:1,6-hexanediol=1:3 in a molar ratio and a carbonate), 7.53 g of 1,4-butanediol, 40.3 g of 2,2-dimethylolpropionic acid (DMPA) and 188 g of N-methylpyrrolidone (NMP) under nitrogen stream. Thereafter, the mixture was heated to 60°C to confirm dissolution of DMPA. To the mixture were added 245 g of 4,4'-dicyclohexylmethane diisocyanate (hydrogen-added MDI) and 0.35 g of dibutyl tin dilaurate (catalyst), and the mixture was heated to 90°C to carry out urethanization reaction for 5 hours to obtain a polyurethane prepolymer (the carboxylic acid group content in the prepolymer at this time was 3.10% by weight based on the solid component). An NCO group content at the time of completion of the urethanization reaction was 4.90% by weight. The reaction mixture was cooled to 80°C, and 26.7 g of triethylamine was added thereto and mixed. 606 g of the reaction mixture was extracted from the mixture and added into a mixed solution comprising 776 g of water and 2.92 g of triethylamine while vigorously stirring. Then, 163 g of ice was poured into the mixture, and 108 g of 35% by weight aqueous 2-methyl-1,5-pentanediamine solution was added to the same to carry out chain-elongation reaction to obtain an aqueous polyurethane resin dispersion. A content of the alicyclic structure, sum of a content of the urethane boding and a content of the urea bonding and a median diameter of the particles of the obtained aqueous polyurethane resin dispersion (5) are shown in Table 1.

### [Preparation of polyurethane film (55)]

In the same manner as in Example 1, a polyurethane film was prepared from the aqueous polyurethane resin dispersion (5). An abrasion amount by the abrasion test and a modulus of elasticity by the tensile test of the obtained polyurethane film (55) are shown in Table 2.

### [Comparative example 1]

### [Preparation of aqueous polyurethane resin dispersion (6)]

In the reaction vessel similar to that of Example 1 were charged 80. g of ETERNACOLL UH-100 (available from UBE INDUSTRIES, LTD., polycarbonate diol; number average molecular weight 1004; hydroxyl value 111.8 mg KOH/g; a polycarbonate diol obtained by reacting 1,6-hexanediol which is a diol component and a carbonate), 0.96 g of 1,4-butanediol, 12.1 g of 2,2-dimethylolpropionic acid (DMPA) and 73.6 g of N-methylpyrrolidone (NMP) under nitrogen stream. Thereafter, the mixture was heated to 60°C to confirm dissolution of DMPA. To the mixture were added 80.8 g of 4,4'-dicyclohexylmethane diisocyanate (hydrogen-added MDI) and 0.23 g of dibutyl tin dilaurate (catalyst), and the mixture was heated to 90°C to carry out urethanization reaction for 5 hours to obtain a polyurethane prepolymer (the carboxylic acid group content in the prepolymer at this time was 2.37% by weight based on the solid component). An NCO group content at the time of completion of the urethanization reaction was 4.31% by weight. The reaction mixture was cooled to 80°C, and 9.10 g of triethylamine was added thereto and mixed. 236 g of the reaction mixture was extracted from the mixture and added into 300 g of water while vigorously stirring. Then, 84.4 g of ice was poured into the mixture, and 38.5 g of 35% by weight aqueous 2-methyl-1,5-pentanediamine solution was added to the same to carry out chain-elongation reaction to obtain an aqueous polyurethane resin dispersion. A content of the alicyclic structure, sum of a content of the urethane boding and a content of the urea bonding and a median diameter of the particles of the obtained aqueous polyurethane resin dispersion (6) are shown in Table 1.

### [Preparation of polyurethane film (66)]

In the same manner as in Example 1, a polyurethane film was prepared from the aqueous polyurethane resin dispersion (6). An abrasion amount by the abrasion test and a modulus of elasticity by the tensile test of the obtained polyurethane film (66) are shown in Table 2.

### [Comparative example 2]

### [Preparation of aqueous polyurethane resin dispersion (7)]

In the reaction vessel similar to that of Example 1 were charged 79.6 g of ETERNACOLL UM90 (1/3) (available from UBE INDUSTRIES, LTD., polycarbonate diol; number average molecular weight 894; hydroxyl value 125.5 mg KOH/g; a polycarbonate diol obtained by reacting a polyol mixture wherein the polyol component comprises 1,4-cyclohexanedimethanol:1,6-hexanediol=1:3 in a molar ratio and a carbonate), 9.60 g of 2,2-dimethylolpropionic acid (DMPA) and 68.5 g of N-methylpyrrolidone (NMP) under nitrogen stream. Thereafter, the mixture was heated to 60°C to confirm dissolution of DMPA. To the mixture were added 70.9 g of 4,4'-dicyclohexylmethane diisocyanate (hydrogen-added MDI) and 0.20 g of dibutyl tin dilaurate (catalyst), and the mixture was heated to 90°C to carry out urethanization reaction for 5 hours to obtain a polyurethane prepolymer (the carboxylic acid group content in the prepolymer at this time was 2.02% by weight based on the solid component). An NCO group content at the time of completion of the urethanization reaction was 3.84% by weight. The reaction mixture was cooled to 80°C, and 7.21 g of triethylamine was added thereto and mixed. 211 g of the reaction mixture was extracted from the mixture and added into 277 g of water while vigorously stirring. Then, 62.2 g of ice was poured into the mixture, and 30.7 g of 35% by weight aqueous 2-methyl-1,5-pentanediamine solution was added to the same to carry out chain-elongation reaction to obtain an aqueous polyurethane resin dispersion. A content of the alicyclic structure, sum of a content of the urethane boding and a content of the urea bonding and a median diameter of the particles of the obtained aqueous polyurethane resin dispersion (7) are shown in Table 1.

### [Preparation of polyurethane film (77)]

In the same manner as in Example 1, a polyurethane film was prepared from the aqueous polyurethane resin dispersion (7). An abrasion amount by the abrasion test and a modulus of elasticity by the tensile test of the obtained polyurethane film (77) are shown in Table 2.

### [Example 6]

### [Preparation of aqueous polyurethane resin dispersion (8)]

50 g of the aqueous polyurethane resin dispersion (5) and 100 g of the aqueous polyurethane resin dispersion (6) were mixed to obtain an aqueous polyurethane resin dispersion (8). A content of the alicyclic structure, sum of a content of the urethane boding and a content of the urea bonding and a median diameter of the particles of the obtained aqueous polyurethane resin dispersion (8) are shown in Table 1.

### [Preparation of polyurethane film (88)]

In the same manner as in Example 1, a polyurethane film was prepared from the aqueous polyurethane resin dispersion (8). An abrasion amount by the abrasion test and a modulus of elasticity by the tensile test of the obtained polyurethane film (88) are shown in Table 2.

**[Table 1]**

| | Aqueous polyurethane resin dispersion | Content of alicyclic structure [% by weight] | | | Content of urethane· urea bonding [% by weight] | | | Median diameter of particles [nm] |
|---|---|---|---|---|---|---|---|---|
| | | Polyol component | Polyisocyanate component | Total | Urethane bonding | Urea bonding | Total | |
| Example 1 | 1 | 16.3 | 25.4 | 41.8 | 10.9 | 7.1 | 18.0 | 74 |
| Example 2 | 2 | 13.4 | 28.1 | 41.6 | 12.1 | 7.8 | 19.9 | 74 |
| Example 3 | 3 | 11.8 | 30.5 | 42.2 | 13.0 | 8.5 | 21.5 | 74 |
| Example 4 | 4 | 8.2 | 30.3 | 38.5 | 13.0 | 8.4 | 21.4 | 74 |
| Example 5 | 5 | 4.2 | 30.6 | 34.8 | 13.0 | 8.7 | 21.7 | 74 |
| Example 6 | 6 | 1.4 | 27.4 | 28.8 | 11.5 | 7.7 | 19.3 | 74 |
| Comparative example 1 | 7 | 0.0 | 25.7 | 25.7 | 10.8 | 7.3 | 18.1 | 74 |
| Comparative example 2 | 8 | 6.3 | 24.9 | 31.2 | 10.6 | 7.0 | 17.6 | 74 |

**[Table 2]**

| | Polyurethane film | Abrasion test | | | | Tensile test |
|---|---|---|---|---|---|---|
| | | Decreased amount by abrasion [mg] | | | | Modulus of Elasticity [MPa] |
| | | 50 times | 100 times | 200 times | 400 times | |
| Example 1 | 11 | 0.9 | 6.8 | 10.0 | 18.7 | 730 |
| Example 2 | 22 | 0.6 | 2.4 | 9.0 | 18.5 | 660 |
| Example 3 | 33 | 1.9 | 4.3 | 9.4 | 16.7 | 630 |
| Example 4 | 44 | 3.2 | 5.4 | 9.8 | 19.2 | 590 |
| Example 5 | 55 | 2.7 | 5.1 | 8.6 | 16.5 | 520 |
| Example 6 | 88 | 5.2 | 7.9 | 10.5 | 16.6 | 427 |
| Comparative example 1 | 66 | 27.3 | 46.8 | 55.7 | 63.2 | 360 |
| Comparative example 2 | 77 | 13.1 | 28.5 | 37.5 | 44.3 | 396 |

### [Example 7]

### (Preparation of coating composition)

A pigment-dispersed paste was prepared by dispersing 280 g of water-dispersible polyester polyol ("SETAL 6306" manufactured by NUPLEX CO., resin component concentration: 60% by weight, hydroxyl value: 89 mg KOH/resin g, acid value: 42 mg KOH/resin g) neutralized with dimethylethanolamine so that a molar ratio of carboxylic acid/amine became 1.0, 600 g of lutile type titanium dioxide, 15 g of barium sulfate and 280 g of deionized water by a paint shaker for 30 minutes.
To the obtained pigment-dispersed paste were added 430 g of the aqueous polyurethane resin dispersion obtained in Example 1, 115 g of water-dispersible polyester polyol ("SETAL 6306" manufactured by NUPLEX CO.) neutralized with dimethylethanolamine so that a molar ratio of carboxylic acid/amine became 1.0, 115 g of deionized water, 330 g of acryl polyol ("SETALUX 1767VV-65" manufactured by ACZO NOBEL, number average molecular weight=2500, hydroxyl value=150 mg KOH/g (based on the resin component), Tg=9.0°C) and 330 g of methyl-butyl mixed etherified melamine resin ("U-VAN 2028" manufactured by MITSUI CHEMICALS, INC.), and uniformly dispersed to obtain a coating composition.
The obtained coating composition was coated on an electrodeposited coating steel plate with a thickness of 25 µm, and heated to 140°C for 30 minutes to obtain a coating film having good film-forming property.

### UTILIZABILITY IN INDUSTRY

The aqueous polyurethane resin dispersion of the present invention can be used as a coating agent, a starting material for a composition for a paint excellent in abrasion resistance, and a coating composition containing the aqueous polyurethane resin dispersion of the present invention has high utility. Also, according to the process for preparing the aqueous polyurethane resin dispersion of the present invention, an aqueous polyurethane resin dispersion which can provide a coating film having good abrasion resistance can be obtained with a simple and convenient method.

## Claims

1. An aqueous polyurethane resin dispersion which comprises a polyurethane resin obtained by reacting
(A) the polyurethane prepolymer which is obtained by reacting (a) a polyisocyanate compound, (b) a polyol compound containing a polycarbonate polyol having an alicyclic structure, and (c) a polyol compound having an acidic group, and
(B) a chain elongating agent having a reactivity with the isocyanate group of (A) the polyurethane prepolymer,
being dispersed in an aqueous medium,
a content of an alicyclic structure is 26.0 to 60.0% by weight in terms of a solid component(s), and a sum of a content of an urethane boding and a content of a urea bonding is 17.7 to 30.0% by weight in terms of a solid component(s).

2. The aqueous polyurethane resin dispersion according to Claim 1, wherein (b) the polyol compound containing a polycarbonate polyol having an alicyclic structure contains a polycarbonate polyol obtained by reacting a polyol containing cyclohexanedimethanol and a carbonate.

3. The aqueous polyurethane resin dispersion according to Claim 2, wherein a unit derived from cyclohexanedimethanol among units derived from the polyol containing the cyclohexanedimethanol which constitutes the polycarbonate polyol is 20 mol% or more.

4. The aqueous polyurethane resin dispersion according to any one of Claims 1 to 3, wherein (a) the polyisocyanate compound contains one or more polyisocyanate compound having an alicyclic structure.

5. The aqueous polyurethane resin dispersion according to Claim 4, wherein (a) the polyisocyanate compound is 4,4'-dicyclohexylmethane diisocyanate.

6. The aqueous polyurethane resin dispersion according to any one of Claims 1 to 5, wherein (B) the chain elongating agent is a polyamine compound.

7. A coating composition containing the aqueous polyurethane resin dispersion according to any one of Claims 1 to 6.

8. A process for preparing the aqueous polyurethane resin dispersion according to any one of Claims 1 to 6, which comprises
(α) a step of reacting (a) a polyisocyanate compound, (b) a polyol compound containing a polycarbonate polyol having an alicyclic structure and (c) a polyol compound having an acidic group to obtain (A) the polyurethane prepolymer;
(β) a step of neutralizing an acidic group of (A) the polyurethane prepolymer;
(γ) a step of dispersing the polyurethane prepolymer in an aqueous medium; and
(δ) a step of reacting an isocyanate group of (A) the polyurethane prepolymer and (B) a chain elongating agent to obtain an aqueous polyurethane resin.
